# DEMANDE DE BREVET EUROPEEN

(11) **EP 0 794 079 A1**
(43) Date de publication de la demande: **10.09.1997**
(21) Numéro de dépôt: 97400343.6
(22) Date de dépôt: 17.02.1997
(51) Int. Cl.: B60J 10/08, B60J 10/00

(54) **Joint et son procédé de montage par clipage**

(30) Priorité: 04.03.1996 FR 9602677
(71) Demandeur: HUTCHINSON S.A., F-75008 Paris (FR)
(72) Inventeur: Tessier, Bernard, 45120 Chalette/Loing (FR)
(74) Mandataire: Hurwic, Aleksander

(57) **Abrégé**

La présente invention se rapporte à un joint, notamment pour porte de véhicule automobile et à son procédé de montage par clipage.

Un profilé d'étanchéité allongé selon l'invention (21) comporte une base (25) susceptible d'être fixée par clipage sur un caisson (11) ainsi qu'un élément d'étanchéité (23) solidarisé le long des deux extrémités de la base. Avantageusement, l'élément d'étanchéité (23) forme une voûte ou un tunnel. Par exemple, l'élément d'étanchéité a, en coupe transversale, une forme en U, V (retournés), en C, en M ou autre.

La présente invention s'applique notamment à la réalisation de joints d'isolation thermique et/ou phonique pour portes ou fenêtres, notamment aux joints pour portes coulissantes ou battantes mises en oeuvre dans l'industrie automobile, ainsi qu'aux portes ou aux fenêtres battantes ou coulissantes mises en oeuvre dans le bâtiment.

## Description

La présente invention se rapporte à un joint, notamment pour porte de véhicule automobile et à son procédé de montage par clipage.

FR-93 06190, publiée sous le numéro FR-A-2 705 752, décrit un joint comportant un tube et une base de montage susceptible d'être monté par clipage dans un caisson de réception de la base du joint (rail métal ou plastique par exemple). Le clipage est obtenu lorsque l'on exerce sur le joint une force en direction du caisson, par basculement des éléments de la base du joint sur des montants du caisson délimitant une ouverture allongée dont la largeur est inférieure à celle de la base du joint. Une traction dirigée dans le sens inverse à celle ayant permis le montage par clipage permet le déclipage avec dépose du joint en vue de son remplacement ou pour effectuer une réparation sur le véhicule.

Il peut arriver qu'une traction provoque la dépose involontaire du joint.

C'est par conséquent un but de la présente invention d'offrir un joint, notamment pour porte de véhicule automobile, permettant une fixation sûre en minimisant le risque de dépose accidentelle du joint.

C'est également un but de la présente invention d'offrir un tel joint permettant un montage rapide.

C'est aussi un but de la présente invention d'offrir un joint permettant un montage aisé avec une faible force d'application.

C'est également un but de la présente invention d'offrir un joint permettant par inspection visuelle de constater son montage correct.

Ces buts sont atteints par un profilé d'étanchéité allongé selon l'invention comportant une base susceptible d'être fixée par clipage sur un caisson ainsi qu'un élément d'étanchéité solidarisé le long des deux extrémités de la base. Avantageusement, l'élément d'étanchéité forme une voûte ou un tunnel. Par exemple, l'élément d'étanchéité a, en coupe transversale, une forme en U, V (retournés), en C, en M ou autre.

L'invention a principalement pour objet un joint notamment pour portes de véhicules automobiles comportant un élément d'étanchéité ainsi qu'une base de fixation comprenant deux bras susceptibles de basculer autour d'un axe pour assurer la fixation par clipage du joint dans un profilé ou caisson de réception, caractérisé en ce que l'élément d'étanchéité est solidarisé avec la base de fixation le long des deux bords transversalement opposés de la base.

L'invention a également pour objet un joint, caractérisé en ce que l'élément d'étanchéité forme une voûte.

L'invention a également pour objet un joint, caractérisé en ce que, en coupe transversale, l'élément d'étanchéité a une forme en C.

L'invention a également pour objet un joint, caractérisé en ce qu'il est symétrique par rapport à un plan médian longitudinal et en ce que la base de fixation comporte deux bras disposés symétriquement par rapport auxdits plans, chaque bras comporte un évidement de réception de l'extrémité d'un montant formant un point d'appui et de basculement du bras.

L'invention a également pour objet un joint, caractérisé en ce qu'il comporte des pieds d'appui sur le fond d'un caisson de réception.

L'invention a également pour objet un joint, caractérisé en ce que lesdits pieds sont réalisés en caoutchouc mousse.

L'invention a également pour objet un joint, caractérisé en ce que la fixation par clipage est obtenu par écartement des bras.

L'invention a également pour objet un dispositif, caractérisé en ce que l'élément d'étanchéité du joint assure l'étanchéité en étant comprimé en direction du caisson de réception selon un plan de symétrie longitudinal du joint.

L'invention a également pour objet un procédé de montage d'un joint, caractérisé en ce qu'il comporte une étape de pénétration des extrémités des montants d'un caisson de montage dans des évidements de réception des bras de la base de fixation du joint et une étape de compression dans la direction de l'ouverture du caisson de réception jusqu'au clipage de la base de fixation dans le caisson de réception.

L'invention sera mieux comprise au moyen de la description ci-après et des figures annexées données comme des exemples non limitatifs et sur lesquelles :
- la figure 1 est une vue en coupe transversale d'un joint de type connu ;
- la figure 2 est une vue en coupe transversale d'un premier exemple de réalisation d'un joint selon la présente invention dans une condition avant montage ;
- la figure 3 est une vue analogue du joint de la figure 2 dans une condition montée sur un caisson ;
- la figure 4 est une vue en coupe transversale d'un deuxième exemple de réalisation d'un joint selon la présente invention dans une condition avant montage ;
- la figure 5 est une vue analogue du joint de la figure 4 dans une condition montée sur un caisson.

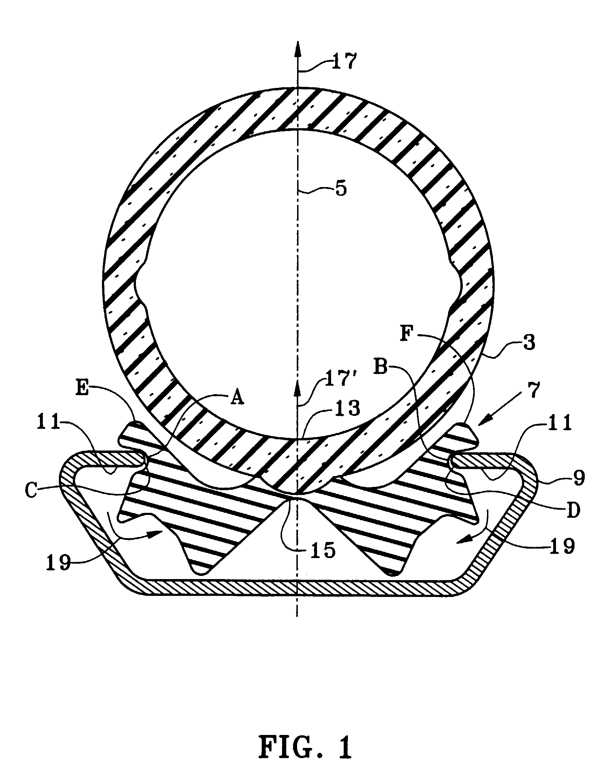

Sur les figures 1 à 5, on a utilisé les mêmes références pour désigner les mêmes éléments.

Sur la figure 1, on peut voir un joint de type connu comportant un élément tubulaire d'étanchéité 3 solidarisé sensiblement au niveau d'un plan médian longitudinal 5 à une base 7 clipable sur un caisson 9. Le clipage assurant la fixation du joint 1 est assuré par le basculement des bras de la base 7 qui prennent appui sur des extrémités des montants 11 du caisson 9.

Le joint de type connu présente plusieurs inconvénients. Une zone 13 de l'élément tubulaire d'étanchéité 3 est solidarisée avec une zone médiane 15 de la base 7, ce qui la rend moins flexible lors du passage de la condition avant montage à la condition montée (illustrée sur la figure 1). Par ailleurs, une traction exercée selon la flèche 17 sur l'élément tubulaire d'étanchéité 3 est transmise en 17' par la zone 13 à la zone 15 de la base qui génère des couples de basculement symbolisés par les flèches 19 susceptibles d'engendrer un basculement vers la condition démontée et d'entraîner la dépose du joint. Il est à noter que la force de traction selon la flèche 17 est relativement faible dans la mesure où elle est sensiblement égale à la force d'appui nécessaire au clipage lors de la pose du joint. Il peut en résulter dans certains cas une dépose involontaire du joint de type connu.

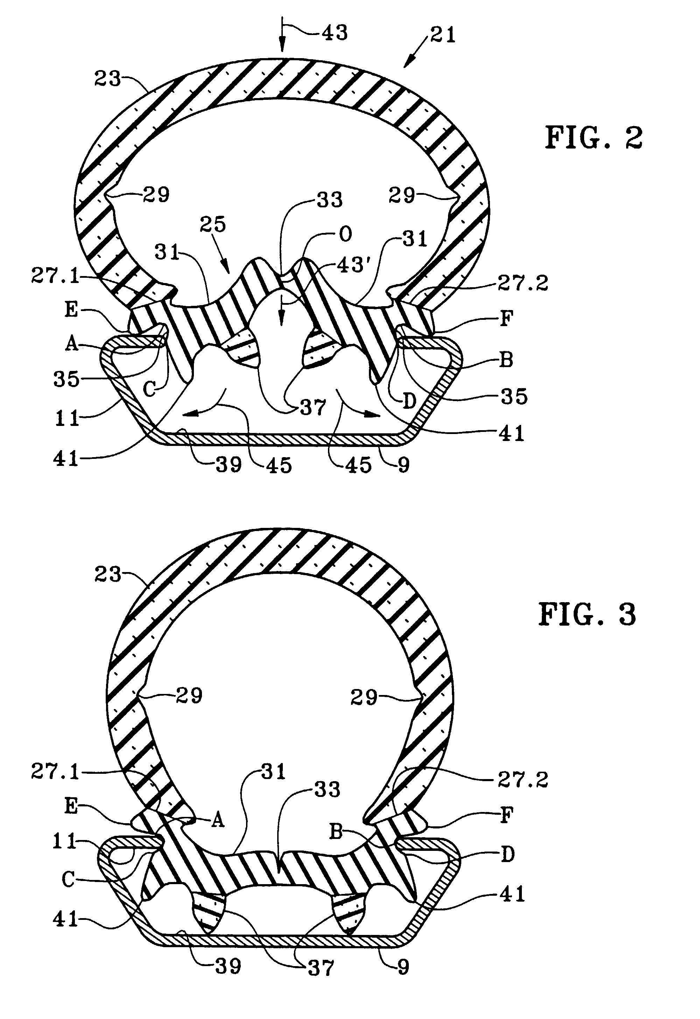

Sur les figures 2 et 3, on peut voir un premier exemple de réalisation d'un joint 21 selon la présente invention comportant un élément d'étanchéité 23 solidarisé avec une base clipable 25 le long d'extrémités transversales 27.1 et 27.2 de la base 25. Avantageusement, la paroi interne de l'élément d'étanchéité est munie de zones 29 de plus faible épaisseur disposées en vis-à-vis et formant charnières. Avantageusement, l'élément d'étanchéité 23 est réalisé en caoutchouc cellulaire et forme une voûte ou un tunnel. Dans l'exemple illustré, il présente en coupe transversale une forme en C couché.

Le caisson 9 est réalisé, par exemple, en acier, en matière plastique ou en une autre matière rigide, permettant d'assurer le clipage de la base 25.

La base 25 est par exemple réalisée en élastomère ou plastomère ayant une dureté comprise entre 80 Shore A et 60 Shore D, par exemple égale à 95 Shore A.

La base 25 comporte deux bras 31 avantageusement reliés par une zone 33 de plus faible épaisseur formant charnière. Chaque bras 31 comporte un évidement 35 de réception de l'extrémité d'un montant 11 du caisson 9, assurant un point d'appui permettant le basculement des bras 31 lors du clipage. Avantageusement, chaque bras 31 comporte un pied 37, de préférence réalisé en caoutchouc cellulaire ou analogue, d'appui sur le fond 39 du caisson 9. De tels pieds améliorent simultanément l'ancrage du joint 21 dans le caisson 9 et l'étanchéité procurée par le joint en empêchant la circulation d'air entre le fond 39 du caisson 9 et la base 25 du joint 21. Avantageusement, chaque bras 31 comporte un pied latéral 41 qui en condition montée (figure 3) est dirigé vers les parois latérales du caisson 9 ou repose sur ces parois. Les évidements 35 des bras 31 ont une géométrie permettant, en condition non montée, ou, en cours de montage (passage entre la figure 2 et la figure 3), la pénétration des extrémités C et D des montants 11 aux fcnds A et B des évidements 35.

Le clipage assurant la fixation du joint 21 selon la présente invention est assuré par le basculement des bras 31 en prenant appui sur les extrémités C et D des montants 11. A est un point situé au fond de l'évidement 35 du bras 31 situé sur la gauche des figures, B est un point situé au fond de l'évidement 35 du bras 31 situé à droite sur les figures et O est un point situé sensiblement à la moitié de la charnière 33 dans le plan médian longitudinal, C et D sont des points situés aux extrémités des montants 11 du caisson 9, le point E est situé à l'extrémité d'un premier bras 31, le point F est situé à l'extrémité du second bras 31. La distance EF correspond à la largeur de la base 7 dans la condition non montée du joint 21 (figure 2). La largeur de l'ouverture du caisson 9, c'est-à-dire la distance entre les points C et D, est inférieure à la somme des distances entre le point A et le point O et la distance entre les points O et le point B. La position des segments AO et OB avant et après clipage est sensiblement symétrique par rapport à la droite CD. De même, la largeur CD de l'ouverture du caisson 9 est inférieure à la largeur EF de la base du joint 1 dans la condition non montée (figure 2).

Le montage du joint 21 selon la présente invention s'effectue en exerçant une force 43 dirigée vers le caisson 9, par exemple dans le plan médian du joint sur l'élément d'étanchéité 23. La force est transmise en 43' à la base 25 du joint dont les bras basculent selon les flèches 45. La valeur de la force 43 de montage à exercer dépend de la géométrie et de la taille du joint. Elle est par exemple comprise pour un joint de porte pour véhicule automobile entre 09 N/cm et 14 N/cm, de préférence égale à 12 N/cm.

Avantageusement, le caisson 9 est disposé de telle manière que, pour assurer l'étanchéité, par exemple lors de la fermeture d'une porte, l'élément d'étanchéité 23 travaille en compression, par exemple selon la flèche 43.

Lorsque l'on désire déposer le joint 21 selon la présente invention, par exemple en vue de son remplacement ou pour effectuer une réparation sur le véhicule, il est nécessaire d'exercer une traction dans le sens inverse de la flèche 43 avec une force supérieure à celle nécessaire pour montage du joint 21. La force nécessaire à la dépose est très supérieure à l'effort de clipage de l'ordre de 30 N/cm. Une fois la réparation effectuée, le même joint ou un nouveau joint de remplacement pourra être aisément fixé par clipage dans le caisson 9. Il est à noter que le joint 21 nécessitant une force de dépose supérieure à celle que le joint est capable de supporter ne sort pas du cadre de la présente invention. Un tel joint se déchire lors de la dépose au niveau de l'élément d'étanchéité 23 et/ou de la liaison entre l'élément d'étanchéité 23 et la base 25.

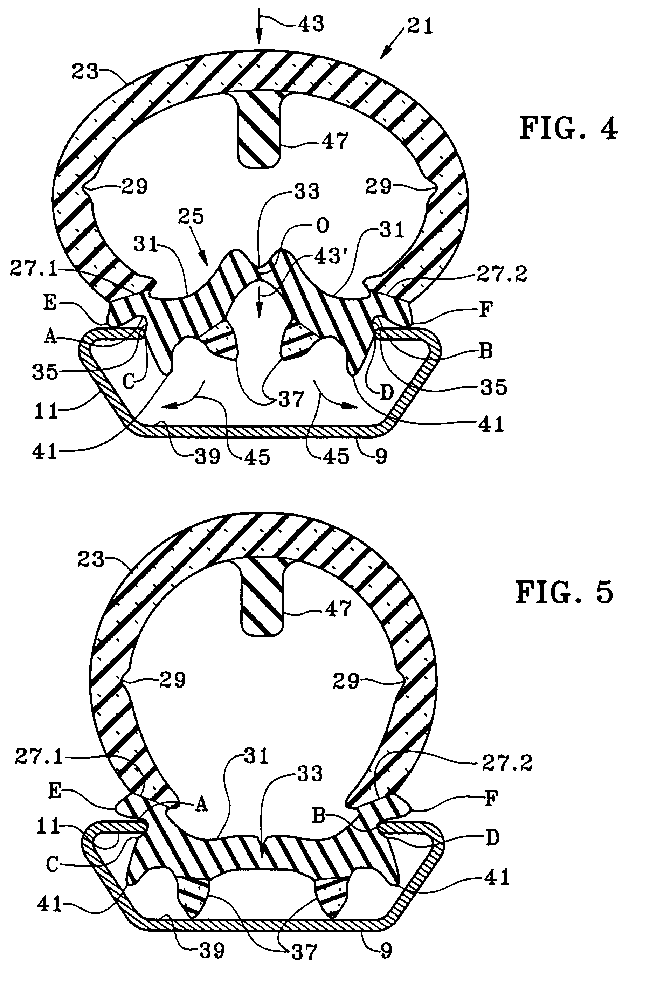

Sur les figures 4 et 5, on peut voir une variante de réalisation du joint 23 selon la présente invention comportant dans le plan médian une nervure 47, avantageusement réalisée en élastomère ou plastomère relativement dur, solidarisée avec la paroi interne avec l'élément d'étanchéité 23. La nervure 47 facilite le montage par clipage de la base 25 sur le caisson 9 en prenant appui sur la charnière 33. Ainsi, lorsqu'on exerce une pression de montage 43 sur l'élément 23, on limite la déformation de l'élément d'étanchéité lors des opérations de montage. La nervure 47 transmet l'effort d'enfoncement à la base 25.

Il est bien entendu que la présente invention n'est pas limitée à la forme du joint décrit mais s'étend à toutes les formes des bases 25 permettant le clipage sur des montants, par exemple d'un caisson 9 et toutes les formes d'éléments d'étanchéité 23 permettant leur fixation le long des bords 27.1 et 27.2 desdites bases.

Il est bien entendu que selon la dureté de l'élastomère employé pour la base 7, les bras 31 subissent certaines déformations. Toutefois, en dehors du moment du basculement sur le clipage, les bras 31 ont avantageusement la même forme dans la condition avant montage des figures 2 et 4 et dans la condition montée des figures 3 et 5.

Le joint selon la présente invention est avantageusement obtenu par extrusion ou co-extrusion.

La présente invention s'applique notamment à la réalisation de joints d'isolation thermique et/ou phonique pour portes ou fenêtres, notamment aux joints pour portes coulissantes ou battantes mises en oeuvre dans l'industrie automobile, ainsi qu'aux portes ou aux fenêtres battantes ou coulissantes mises en oeuvre dans le bâtiment.

## Revendications

1. Joint notamment pour portes de véhicules automobiles comportant un élément d'étanchéité ainsi qu'une base de fixation comprenant deux bras (31) susceptibles de basculer autour d'un axe (A,O,B) pour assurer la fixation par clipage du joint (21) dans un profilé ou caisson de réception (9), caractérisé en ce que l'élément d'étanchéité (23) est solidarisé avec la base de fixation (25) le long des deux bords transversalement opposés (27.1, 27.2) de la base (25).

2. Joint selon la revendication 1, caractérisé en ce que l'élément d'étanchéité (23) forme une voûte.

3. Joint selon la revendication 2, caractérisé en ce que, en coupe transversale, l'élément d'étanchéité a une forme en C.

4. Joint selon la revendication 1, 2 ou 3, caractérisé en ce qu'il est symétrique par rapport à un plan médian longitudinal et en ce que la base de fixation (25) comporte deux bras (31) disposés symétriquement par rapport auxdits plans, chaque bras (31) comporte un évidement (35) de réception de l'extrémité d'un montant (11) formant un point d'appui et de basculement du bras.

5. Joint selon l'une quelconque des revendications précédentes, caractérisé en ce qu'il comporte des pieds (37) d'appui sur le fond (39) d'un caisson de réception (9).

6. Joint selon la revendication 5, caractérisé en ce que lesdits pieds (37) sont réalisés en caoutchouc mousse.

7. Joint selon l'une quelconque des revendications précédentes, caractérisé en ce que la fixation par clipage est obtenu par écartement des bras (31).

8. Dispositif comportant un joint selon l'une quelconque des revendications précédentes, caractérisé en ce que l'élément d'étanchéité (23) du joint (21) assure l'étanchéité en étant comprimé en direction du caisson de réception (9) selon un plan de symétrie longitudinal du joint (21).

9. Procédé de montage d'un joint selon l'une quelconque des revendications 1 à 7, caractérisé en ce qu'il comporte une étape de pénétration des extrémités des montants (11) d'un caisson de montage (9) dans des évidements de réception (35) des bras (31) de la base de fixation (25) du joint (21) et une étape de compression dans la direction de l'ouverture (C,D) du caisson de réception (9) jusqu'au clipage de la base de fixation (25) dans le caisson de réception (9).
